# FASCICULE DE BREVET EUROPEEN

(11) **EP 1 111 751 B1**
(45) Date de publication et mention de la délivrance du brevet: **13.02.2008**
(21) Numéro de dépôt: 00403521.8
(22) Date de dépôt: 14.12.2000
(51) Int. Cl.: H02H 7/18

(54) **Dispositif de sécurité pour batterie d'accumulateurs électriques et batterie équipée de ce dispositif**
Schutzvorrichtung für Batteriezellen und Batterie mit einer solchen Vorrichtung
Safety device for electric battery cells and battery provided with such a device

(30) Priorité: 23.12.1999 FR 9916330
(43) Date de publication de la demande: 27.06.2001
(73) Titulaire: Saft Finance S.à.r.l., 1471 Luxembourg (LU)
(72) Inventeur: Vanhee, Jean-Luc, 86280 St Benoit (FR)
(74) Mandataire: Hirsch & Associés

(56) Documents cités:
- EP-A- 0 515 024
- US-A- 5 258 244

## Description

L'invention concerne un dispositif de sécurité, pour batterie d'accumulateurs électriques, qui est plus particulièrement destiné à assurer un maintien de la fiabilité de la batterie en cas de défaillance d'un des accumulateurs, notamment dans le cas d'une batterie de forte capacité composée de groupes montés en série d'accumulateurs eux-mêmes montés en parallèle.

Les conditions d'utilisation des batteries d'accumulateurs électriques, imposent souvent que le courant et/ou la tension fournis par une batterie à une application puissent être maintenus par la batterie, même si l'un des accumulateurs de celle-ci devient inutilisable, ceci sans qu'à aucun moment la batterie ne soit en circuit ouvert. Ceci est notamment le cas, lorsqu'il n'est pas possible d'intervenir sur la batterie pour réparation. Un tel maintien est notamment réalisable, lorsque la batterie est prévue à cet effet et que, par exemple, elle est composée de groupes en série d'accumulateurs mis en parallèle, comme indiqué ci-dessus.

La mise hors-circuit de l'accumulateur défaillant est alors à prévoir et ceci est notamment réalisable en isolant cet accumulateur défaillant de la mise en série, sans provoquer à aucun moment de circuit ouvert dans la batterie. Ceci peut être obtenu par un shuntage total au moyen d'un dispositif conducteur mis en parallèle avec l'accumulateur défaillant, ou éventuellement avec le groupe d'accumulateurs défaillant, pour assurer une dérivation quasi totale du courant qui traverse le dit accumulateur ou groupe d'accumulateurs défaillant.

Il existe déjà des dispositifs de dérivation, réalisés à cette fin au moyen de diodes ou de composants électroniques fonctionnellement correspondants, qui dérivent le courant d'un accumulateur ou d'un groupe d'accumulateurs défaillant, lorsque celui-ci sort d'une plage de tension de fonctionnement prévue. Ces dispositifs présentent l'inconvénient d'être fortement dissipatifs thermiquement, en particulier lorsqu'ils sont associés à des accumulateurs de type Lithium-ion, pour lesquels la plage de fonctionnement se situe entre 2,5 et 4,2 volts, ou dans le cas d'accumulateurs de forte capacité d'autres technologies, telles que notamment Nickel-Hydrogène et Nickel-Cadmium, lorsque les courants de décharge sont importants et par exemple supérieurs à 80 ampères.

Il existe aussi des dispositifs dits "non dissipatifs" utilisés notamment pour les batteries de type Nickel-Hydrogène. Ces dispositifs ont généralement pour inconvénient de mettre l'accumulateur défaillant en court-circuit externe, lorsqu'ils sont activés, ce qui n'est pas acceptable dans le cas d'une défaillance affectant un accumulateur à l'état chargé. Or comme il est connu, de telles défaillances sont susceptibles d'être rencontrées, en particulier avec des accumulateurs Lithium-ion. Pour palier cet inconvénient, certaines batteries sont équipées de dispositifs de type fermeture avant rupture (make before break) permettant de fermer en premier un circuit parallèle à un accumulateur défaillant, afin de détourner le courant circulant dans celui-ci avant de rompre le circuit de mise en série. Ces dispositifs permettent d'isoler l'accumulateur défaillant des autres accumulateurs montés en série avec lui dans la batterie et ceci en un temps suffisamment court, couramment de l'ordre de quelques millisecondes, pour que le court-circuit externe ainsi provoqué ne soit pas dommageable. Mais de tels dispositifs sont complexes, car ils s'apparentent à des dispositifs de type pyrotechnique, et ils ont pour inconvénient majeur de comporter un élément supplémentaire, de type fusible ou coupe-circuit, dans le montage en série des accumulateurs ou groupe d'accumulateurs de la batterie. Cet élément est donc un facteur de diminution de la fiabilité de l'ensemble que constitue la batterie.

Un dispositif de sécurité par dérivation, non dissipatif thermiquement, pour batterie constituée d'accumulateurs à forte tension, notamment en technologie Lithium-ion et/ou pour batterie débitant une forte intensité de courant est donc recherché. Il est aussi nécessaire de trouver un tel dispositif de sécurité par dérivation qui puisse fonctionner avec un accumulateur à l'état chargé, sans risque de provoquer un court-circuit externe sur cet accumulateur. De plus ce dispositif ne doit pas comporter d'élément supplémentaire de type coupe-circuit qui pourrait diminuer la fiabilité de l'agencement de mise en série prévu au niveau de la batterie.

L'invention propose donc un dispositif de sécurité visant à remédier à ces inconvénients, pour différentes configurations de batterie d'accumulateurs électriques, en particulier pour des batteries comportant une pluralité d'accumulateurs individuels connectés en série et pour des batteries constituées à l'aide de groupes composés d'accumulateurs montés en parallèles et dans lesquelles les groupes sont mis en série.

Ce dispositif de sécurité pour batterie d'accumulateurs électriques, composée de modules montés en série comportant chacun un accumulateur ou un groupe d'accumulateurs et notamment un groupe d'accumulateurs montés en parallèle, comporte au moins un agencement permettant de court-circuiter individuellement un module, en cas de défaillance de ce module, en maintenant en permanence la continuité électrique entre les autres modules montés en série avec lui dans la batterie.

Selon une caractéristique de l'invention, l'agencement individuel de module que le dispositif de sécurité met en oeuvre, comporte un premier circuit de dérivation qui est connecté aux deux bornes d'extrémité d'un module dans la batterie et qui comporte un organe consommateur d'énergie électrique en série avec un organe de commutation permettant d'établir une dérivation entre les bornes du module au travers de l'organe consommateur, lorsque la tension aux bornes de ce module est supérieure à une valeur déterminée de seuil supérieur de tension et un second circuit de dérivation étant organisé pour court-circuiter les bornes du module, lorsque la tension aux bornes du module devient inférieure à une valeur déterminée de seuil inférieur de tension.

Selon une forme de réalisation du dispositif selon l'invention, ledit agencement provoque une mise en court-circuit interne du module, aux bornes duquel il est relié par un premier circuit de dérivation, par prolongation de la décharge de ce module par l'intermédiaire dudit premier circuit de dérivation, de telle sorte que, dès que la batterie est à nouveau sollicitée en décharge, le module soit déchargé jusqu'à une inversion de la polarité, correspondant à un seuil négatif de la tension présente aux bornes du module et provoquant sa mise en court-circuit.

Selon une variante de réalisation du dispositif selon l'invention, un agencement de module comporte un second circuit de dérivation connecté aux deux bornes d'extrémité du module dans la batterie, en parallèle au premier circuit de dérivation associé à ce module, le second de ces circuits comportant un organe de commutation permettant de court-circuiter directement les bornes du module, lorsque la tension aux bornes du module est inférieure à une valeur déterminée de seuil inférieur de tension (V2).

L'invention concerne aussi les batteries d'accumulateurs électriques composées de modules, montés en série, comportant chacun un accumulateur ou un groupe d'accumulateurs et notamment un groupe d'accumulateurs montés en parallèle, qui mettent en oeuvre un dispositif de sécurité présentant les caractéristiques définies ci-dessus.

L'invention, ses caractéristiques et ses avantages sont précisés dans la description qui suit en liaison avec les figures évoquées ci-dessous.

La figure 1 présente un schéma de principe d'un des agencements individuels d'un dispositif de sécurité, prévus selon l'invention, chacun pour un module d'une batterie constituée d'une pluralité de modules en série, composés chacun d'un accumulateur électrique ou d'un groupe d'accumulateurs électriques.

La figure 2 présente un schéma de principe d'un agencement individuel de dispositif de sécurité, selon l'invention, dans le cas d'un montage où ce dispositif est commandé par une unité de commande programmée externe.

La figure 3 présente un schéma de principe d'un agencement individuel de dispositif de sécurité, selon l'invention, dans un montage où cet agencement dispose d'une commande interne.

La figure 4 présente un schéma de principe d'un agencement individuel de dispositif de sécurité, selon l'invention, dans un montage où ce dispositif est commandé par un ensemble mixte de commande.

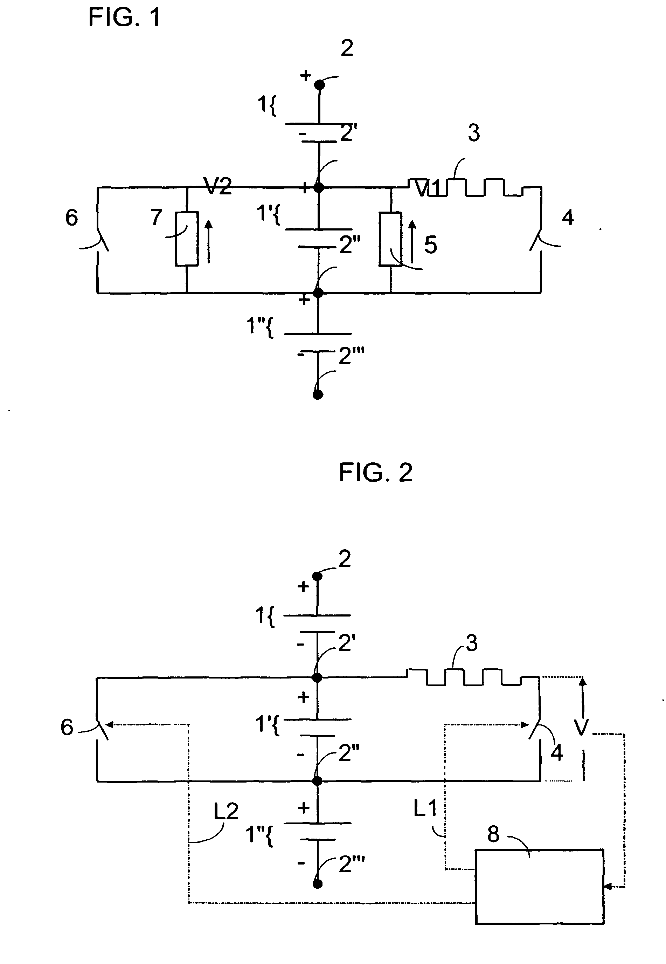

L'agencement individuel de dispositif de sécurité qui est schématisé sur la figure 1 est destiné à être associé à un module d'une batterie d'accumulateurs électriques souvent composés de modules, usuellement identiques, montés en série et symbolisés par trois d'entre eux, référencés 1, 1' et 1" sur la figure 1. Comme déjà indiqué plus haut, chaque module est susceptible d'être constitué d'un accumulateur électrique ou d'un groupe d'accumulateurs électriques et par exemple d'un groupe de "p" accumulateurs identiques montés en parallèles.

Chaque module est prévu équipé d'un agencement individuel de dispositif de sécurité, tel que schématisé sur la figure 1, pour le module 1'. L'agencement présenté comporte deux circuits de dérivation qui sont connectés en parallèle aux deux bornes d'extrémité d'un module dans la batterie, soit aux bornes 2' et 2".pour le module 1'.

Un premier des deux circuits de dérivation comporte un organe consommateur d'énergie électrique, tel que par exemple une résistance de dissipation d'énergie 3, en série avec un organe de commutation 4, par exemple de type bistable. Ce premier circuit est prévu pour pouvoir être mis en service par action sur l'organe de commutation 4 de manière à le rendre passant et à court-circuiter les bornes 2' et 2" du module 1', au travers de l'organe consommateur 3, en toutes conditions et plus particulièrement lorsque le ou les accumulateurs du module 1' sont à l'état chargé et éventuellement de pleine charge. L'organe consommateur 3 est donc choisi en fonction de la capacité du module, de manière à permettre une décharge lente de ce module, avec une dissipation thermique compatible avec l'environnement batterie et correspondant typiquement à un courant équivalent au dixième ou au centième de la valeur de la capacité du module 1'. Il est prévu qu'en cas de défaillance du module 1', l'accumulateur ou le groupe d'accumulateurs de ce module se décharge ainsi par rapport aux autres accumulateurs du montage série constituant la batterie, comme si son courant de fuite était augmenté du courant traversant l'organe consommateur 3. La mise à l'état passant, ou conducteur, de l'organe de commutation 4 est supposée commandée, directement ou indirectement, par un déclencheur 5, par exemple à détection du franchissement d'une valeur de seuil supérieur de tension V1 par la tension aux bornes du module 1'. Comme il sera précisé plus loin, l'organe de commutation et le déclencheur peuvent être combinés de manière que le premier circuit de dérivation fonctionne de manière autonome. Ils peuvent aussi éventuellement être dissociés et l'organe de commutation peut être commandé par l'intermédiaire d'une unité de commande programmée extérieure.

Le second des deux circuits de dérivation du dispositif de sécurité présenté sur la figure 1, comporte un organe de commutation 6, par exemple de type monocoup et en conséquence à changement d'état irréversible, permettant de directement court-circuiter les bornes 2' et 2" du module 1', lorsqu'il est commuté conducteur depuis un état où il n'est pas passant. La commande à l'état conducteur de l'organe de commutation 6 est ici supposée déclenchée, par un déclencheur 7, par exemple à détection du franchissement d'une valeur de seuil inférieur de tension V2 par la tension aux bornes du module 1', de manière à créer un court-circuit destiné à être définitif entre ces bornes. Il est bien entendu envisageable que les déclencheurs 5 et 7 soient combinés.

Selon l'invention, il est prévu une mise en action successive du premier et du second circuit de dérivation, de manière à permettre de réduire progressivement la tension aux bornes du module 1', au moyen du premier circuit de dérivation et au cours d'une première phase, si la tension à ces bornes a dépassé la valeur de seuil supérieur déterminée V1, au-dessus de laquelle le module 1' doit être considéré comme devenu défaillant. Le second circuit de dérivation se met en suite en service, au cours d'une seconde phase, lorsque que la tension aux bornes du module 1' est descendue à la valeur V2, sous l'action du premier circuit, pour permettre un court-circuit direct et permanent entre ces bornes. La valeur de seuil inférieur de tension V2 est déterminée, d'une manière classique pour l'homme de métier, de manière à autoriser une telle mise en court-circuit sans risque, elle est par exemple choisie de l'ordre de 2,5 volts dans le cas d'un accumulateur en technologie Lithium-ion.

Selon l'invention, il est alternativement prévu d'obtenir une mise en court-circuit en interne entre bornes d'un module défaillant, en poursuivant la décharge de ce module par l'intermédiaire du premier circuit de dérivation associé à lui jusqu'à la continuité électrique entre bornes d'un module à partir du moment où la tension aux bornes de ce module a dépassé la valeur de seuil supérieur de tension V1. Cette décharge est alors continuée par l'intermédiaire de ce premier circuit de dérivation, jusqu'à une inversion de la polarité qui correspond à un seuil négatif de la tension présente aux bornes du module et qui est obtenue dès lors que la batterie est à nouveau sollicitée en décharge.. Celui-ci présente alors une très faible résistance interne par l'intermédiaire duquel il est définitivement court-circuité.

Dans une forme de réalisation, l'organe de commutation 4 est un relais. Ce relais est calibré pour pouvoir supporter le courant qu'est susceptible de fournir le module 1' au travers de la résistance 3, en cas de défaillance grave pour laquelle la tension aux bornes du module dépasse la valeur de seuil supérieur V1. La résistance 3 est, bien entendu, calibrée, elle aussi, pour la même raison. Dans l'exemple de réalisation schématisé sur la figure 2, le relais qui constitue l'organe de commutation 4 est commandé par une unité de commande programmée 8 externe au dispositif de sécurité, comme symbolisé par la liaison L1. Cette unité de commande programmée 8 est par exemple de type unité logique, organisée autour d'un processeur doté de mémoires et d'au moins une interface, par laquelle est reçue une information de valeur de tension V prélevée aux bornes du module 1'. Elle commande, selon un programme déterminé et de manière successive, l'organe de commutation 4 du premier circuit de dérivation et l'organe de commutation 6 du second circuit de dérivation.

Une telle unité de commande, dûment programmée, permet éventuellement de mettre en oeuvre différents programmes de commande pour les organes de commutation. Il est notamment possible de commander l'organe de commutation 4 de manière différente de celle indiquée plus haut, afin de pouvoir le ramener à une position d'interruption depuis la position où il est conducteur et pour laquelle un courant traverse la résistance 3, en raison de la présence aux bornes du module 1' d'une tension V supérieure à V1, si la tension V redescend de manière prolongée en dessous de V1.

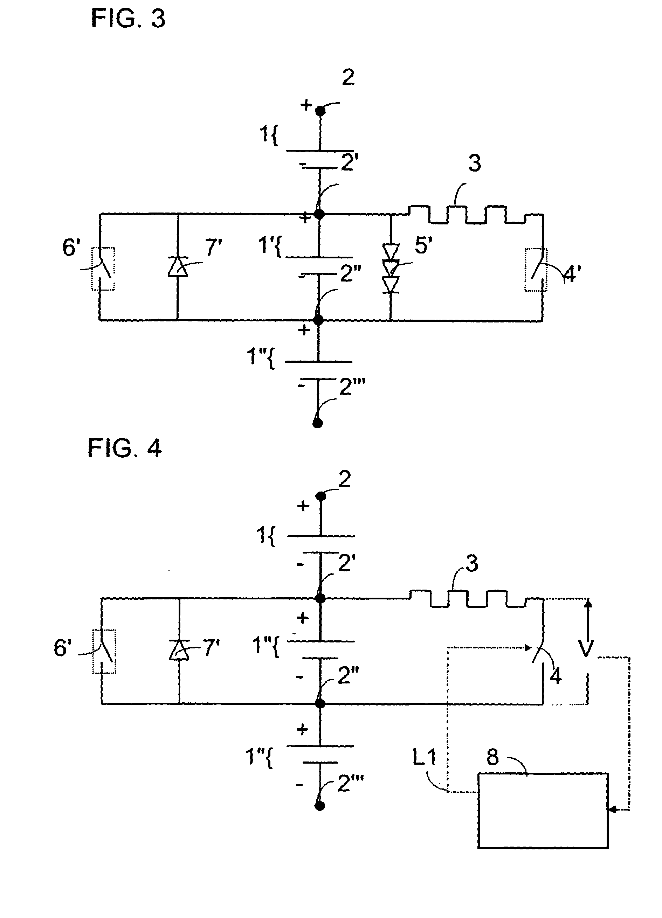

Selon une variante de réalisation, illustrée sur les figures 3 et 4, au moins l'un des organes de commutation, ici références 4', 6', du dispositif de sécurité est un élément thermosensible qui passe d'un état non-conducteur à un état conducteur, lorsqu'il est chauffé. Dans une forme de réalisation, de tels éléments thermosensibles passent de manière irréversible à un état conducteur depuis un état non-conducteur, lorsqu'ils sont chauffés au-delà d'une température minimale de seuil déterminée.

Dans le cas de la figure 3, il est supposé que les deux organes de commutation 4' et 6' sont constitués chacun par un élément thermosensible et ces éléments sont associés à des déclencheurs 5' et 7', de type élément chauffant.

Le déclencheur 5', qui est relié aux bornes du module 1', est ici supposé constitué par une pluralité de diodes montées en série et placées de manière à chauffer l'élément thermosensible qui constitue l'organe de commutation 4'. Ce déclencheur fonctionne lorsque la tension V entre la borne 2" et la borne 2' est supérieure à la valeur supérieure de seuil V1. Le montage série des diodes éventuellement associé à une résistance en série, non représentée, est réalisé de manière connue de l'homme de métier de manière à produire un échauffement suffisant pour faire commuter l'organe de commutation 4', dans ces conditions.

Le déclencheur 7', qui est également relié aux bornes du module 1', est ici supposé constitué par une diode unique montée en sens inverse par rapport aux diodes en série du déclencheur 5', c'est-à-dire avec sa cathode reliée à la borne 2' et son anode reliée à la borne 2". Cette diode unique est placée de manière à chauffer l'élément thermosensible qui constitue l'organe de commutation 6' de manière à le faire commuter lorsque la tension V entre bornes 2" et 2' devient inférieure à la valeur inférieure de seuil V2. Le dispositif de sécurité ainsi réalisé peut donc être entièrement autonome dans son fonctionnement.

Dans le cas de la figure 4, il est supposé que le dispositif de sécurité comporte un organe de commutation 4 de premier circuit de dérivation qui est commandé par une unité de commande 8 externe au dispositif de sécurité, comme dans l'exemple de réalisation présenté sur la figure 2, cette commande étant ici aussi symbolisée par une liaison L1. Par contre le second circuit de dérivation est prévu équipé d'un organe de commutation 6', de type élément thermosensible, commandé par l'intermédiaire d'un déclencheur 7' chauffant, constitué par une diode, selon un montage correspondant à celui envisagé pour le second circuit de dérivation, en liaison avec la figure 3. Dans ce cas, il est ainsi possible de commander l'organe de commutation 4, afin de pouvoir le ramener à une position d'interruption depuis la position où il est conducteur et pour laquelle un courant traverse la résistance 3, en raison de la présence aux bornes du module 1' d'une tension V supérieure à V1, si la tension V redescend de manière prolongée en dessous de V1. Par contre le passage de la tension V au-dessous de la valeur inférieure de seuil V2, entraîne la mise en court-circuit définitive du module ainsi court-circuité.

Quelle que soit la solution choisie, il est préférablement prévu d'équiper chacun des modules en série, d'un ou de plusieurs accumulateurs électriques, que comporte une batterie d'un dispositif de sécurité permettant de le court-circuiter individuellement en cas de défaillance, telle qu'envisagée ci-dessus.

## Revendications

1. Dispositif de sécurité pour batterie d'accumulateurs électriques, composée de modules (1, 1', 1"), montés en série, comportant chacun un accumulateur ou un groupe d'accumulateurs et notamment un groupe d'accumulateurs montés en parallèle, ledit dispositif incluant au moins un agencement permettant de court-circuiter individuellement un module, en cas de défaillance de ce module, en maintenant en permanence la continuité électrique entre les autres modules montés en série avec lui dans la batterie, **caractérisé en ce que** l'agencement individuel de module qu'il met en oeuvre, comporte un premier circuit de dérivation qui est connecté aux deux bornes d'extrémité (2', 2") d'un module dans la batterie et qui comporte un organe (3) consommateur d'énergie électrique en série avec un organe de commutation (4) permettant d'établir une dérivation entre les bornes du module au travers de l'organe consommateur, lorsque la tension aux bornes de ce module est supérieure à une voyeur déterminée de seuil supérieur de tension (V1) et un second circuit de dérivation assurant la mise en court-circuit des bornes du module, lorsque la tension aux bornes de ce module devient inférieure à une valeur déterminée de seuil inférieur de tension (V2).

2. Dispositif, selon la revendication 1, dans lequel ledit agencement provoque une mise en court-circuit interne du module, aux bornes duquel il est relié par un premier circuit de dérivation, par prolongation de la décharge de ce module par l'intermédiaire dudit premier circuit de dérivation, jusqu'à une inversion de la polarité qui correspond à un seuil négatif de la tension présente aux bornes du module et qui est obtenue dès lors que la batterie est sollicitée en décharge.

3. Dispositif, selon la revendication 1, dans lequel un second circuit de dérivation est connecté aux deux bornes d'extrémité (2', 2") d'un module dans la batterie, en parallèle au premier circuit de dérivation associé à ce module, le second de ces circuits comportant un organe de commutation (6) permettant de court-circuiter directement les bornes du module, lorsque la tension aux bornes du module est inférieure à une valeur déterminée de seuil inférieur de tension (V2).

4. Dispositif, selon l'une des revendications 1 à 3, dans lequel il est prévu un agencement par module de batterie.

5. Dispositif, selon l'une des revendications 1 à 4, dans lequel l'organe (3) consommateur d'énergie électrique d'un agencement est constitué par une résistance de dissipation d'énergie.

6. Dispositif, selon les revendications 3 à 5, dans chaque agencement duquel il est prévu au moins un déclencheur (5 ou 7) qui est sensible à la tension présente aux bornes du module auquel l'agencement est associé, pour au moins l'un des circuits de dérivation de cet agencement, et qui commande la commutation à l'état passant de l'organe de commutation de ce circuit à partir d'une valeur de seuil de tension prédéterminée .

7. Dispositif, selon l'une des revendications 1 à 6, dans lequel au moins un organe de commutation d'un circuit de dérivation d'un agencement propre à un module est commandé par l'intermédiaire d'une unité de commande programmée (8) externe en fonction de la tension relevée aux bornes de ce module.

8. Dispositif, selon les revendications 3 à 5, dans lequel l'organe de commutation (4 ou 4') du premier circuit de dérivation d'un agencement individuel, prévu pour un module, est commuté passant, en cas de dépassement de la tension prélevée pour un agencement individuel aux bornes d'un module, au-delà de la valeur déterminée de seuil supérieur de tension prévue, et l'organe de commutation (5 ou 5') du second circuit de dérivation de l'agencement est commuté passant, dès que la tension prélevée est tombée en dessous de la valeur de déterminée de seuil inférieur de tension prévue.

9. Batterie d'accumulateurs électriques, composée de modules, montés en série, comportant chacun un accumulateur ou un groupe d'accumulateurs et notamment un groupe d'accumulateurs montés en parallèle, **caractérisé en ce qu'**elle comporte un dispositif de sécurité, selon l'une des revendications 1 à 8.

## Claims

1. A safety device for a battery of electrical storage cells composed of modules (1, 1', 1") connected in series each including a storage cell or a group of storage cells and in particular a group of storage cells connected in parallel, said device including at least one circuit arrangement for individually short circuiting a module if it should fail and maintaining permanently the electrical continuity between the other modules connected in series with it in said battery, **characterized in that** the individual circuit arrangement for a module employed includes a first shunt circuit that is connected to the two end terminals (2, 2") of a module in said battery and includes an electrical energy consuming member (3) in series with a switching member (4) for applying a shunt to the terminals of said module via said consuming member if the voltage at the terminals of said module is greater than a particular upper voltage threshold value (V1), and a second shunt circuit short circuiting the terminals of said module if the voltage at the terminals of the module falls below a particular lower voltage threshold value (V2).

2. The device claimed in claim 1 wherein the circuit arrangement short circuits internally the module to whose terminals it is connected via a first shunt circuit by extending the discharging of said module via said first shunt circuit until a reversal of polarity which corresponds to a negative threshold of the voltage at the terminals of the module occurs obtained upon attempting to discharge the battery.

3. The device claimed in claim 1 wherein a second shunt circuit is connected to the two end terminals (2, 2") of a module of the battery in parallel with the first shunt circuit associated with said module and this second shunt circuit includes a switching member (6) for directly short circuiting the terminals of the module directly if the voltage at the terminals of the module is below a particular lower voltage threshold value (V2).

4. The device according to one of claims 1 to 3, wherein one circuit arrangement is provided for each battery module.

5. The device according to one of claims 1 to 4, wherein the electrical energy consuming member (3) of an circuit arrangement is an energy dissipating resistor.

6. The device of claims 3 to 5, wherein each circuit arrangement includes at least one trigger device (5 or 7) which is responsive to the voltage present at the terminals of the module with which the circuit arrangement is associated, for at least one of the shunt circuits of said circuit arrangement, and which controls switching of said switching member of this circuit to a conducting state from a predetermined voltage threshold value.

7. The device according to one of claims 1 to 6, wherein at least one switching member of a shunt circuit of a circuit arrangement is controlled by an external programmed control unit (8) in accordance with the voltage at said terminals of said module.

8. The device according to claims 3 to 5 wherein the switching member (4 or 4') of the first shunt circuit of an individual circuit arrangement provided for a module is switched on if the voltage measured for an individual circuit arrangement at said terminals of a module exceeds said particular upper voltage threshold value, and the switching member (5 or 5') of the second shunt circuit of the circuit arrangement is turned on immediately the measured voltage falls below said particular lower voltage threshold value.

9. A battery of electrical storage cells made up of modules connected in series and each including a storage cell or a group of storage cells and in particular a group of storage cells connected in parallel, **characterized in that** it includes a safety device according to one of claims 1 to 8.

## Patentansprüche

1. Sicherheits-Gerät für eine Batterie elektrischer Akkumulatoren, die von in Serien geschalteten Bauelementen (1, 1', 1") zusammengesetzt ist, mit jeweils einem Akkumulator oder einer Gruppe von Akkumulatoren und insbesondere einer Gruppe von in Parallel geschalteten Akkumulatoren, wobei das Gerät wenigstens eine Schaltungs-Anordnung zur individuellen Kurzschließung eines Bauelements einschließt, im Falle des Ausfall dieses Bauelements, mit ununterbrochener Beibehaltung der elektrischen Kontinuität zwischen den anderen mit ihnen in Serien geschalteten Bauelementen der Batterie, **dadurch gekennzeichnet, daß** die einzelne Schaltungs-Anordnung für ein Bauelement, das verwendet wird, eine erste Abzweig-Schaltung einschließt, die mit den zwei End-Klemmen (2, 2") eines Bauelements in der Batterie verbunden wird, und die ein elektrisches Energieverbraucherelement (3) in Serien geschaltet mit einem Umschaltelement (4) einschließt, zur Ausbildung einer Abzweigung zwischen den Klemmen des Bauelements, über das Energieverbraucherelement, wenn die Spannung an den Klemmen des Bauelements größer als ein bestimmter oberer Spannungs-Schwellwert (V1) ist, und eine zweite Abzweig-Schaltung zur Kurzschließung der Klemmen des Bauelements wenn die Spannung an den Klemmen des Bauelements unter einen bestimmten niedrigeren Spannungs-Schwellwert (V2) fällt.

2. Gerät nach Anspruch 1 worin die Schaltungs-Anordnung einen Kurzschluss innerhalb des Bauelements hervorruft, mit deren Klemmen sie über eine erste Abzweig-Schaltung verbunden ist, indem man die Entladung des Bauelements über die erste Abzweig-Schaltung bis zu einer Umkehr der Polarität verlängert, die einer negativen Schwelle der Spannung an den Klemmen des Bauelements entspricht, und die erhalten wird beim Versuch, die Batterie zu entladen

3. Gerät nach Anspruch 1, worin eine zweite Abzweig-Schaltung mit den zwei End-Klemmen (2, 2") von einem Bauelement der Batterie verbunden wird, in Parallele mit der dem jeweiligen Bauelement zugeordneten ersten Abzweig-Schaltung, und diese zweite Abzweig-Schaltung ein Umschaltelement (6) zur direkten Kurzschließung der Klemmen des Bauelements einschließt, wenn die Spannung an den Klemmen des Bauelements unter einem bestimmten niedrigeren Spannungs-Schwellwert (V2) liegt.

4. Gerät nach einem der Ansprüche 1 bis 3, worin jedes Batterie-Bauelement mit einer Schaltungs-Anordnung versorgt wird.

5. Gerät nach einem der Ansprüche 1 bis 4, worin das Energieverbrauchselement (3) einer Schaltungs-Anordnung aus einem energieverbrauchenden Widerstand gebildet ist.

6. Gerät nach einem der Ansprüche 3 bis 5, worin jede Schaltungs-Anordnung wenigstens ein Auslöser-Gerät (5 oder 7) einschließt, welches auf die Spannung an den Klemmen von dem der Schaltungs-Anordnung zugeordneten Bauelement anspricht, für wenigstens eine von den Abzweig-Schaltungen dieser Schaltungs-Anordnung, um, bei einem vorherbestimmten Spannungs-Schwellwert, die Einschaltstellung des Umschaltelements dieser Abzweig-Schaltungen zu steuern.

7. Gerät nach einem der Ansprüche 1 bis 6, worin wenigstens ein Umschaltelement von einer Abzweig-Schaltung einer Schaltungs-Anordnung von einem externen programmierten Steuerwerk (8) gesteuert wird, in Abhängigkeit von der Spannung an den Klemmen dieses Bauelements.

8. Gerät nach den Ansprüchen 3 bis 5 worin das Umschaltelement (4 oder 4') von der ersten Abzweig-Schaltung einer einzelnen Schaltungs-Anordnung, die für ein Bauelement bestimmt ist, auf die Einschaltstellung umgeschaltet wird, wenn die Spannung für eine einzelne Schaltungs-Anordnung an den besagten Klemmen eines Bauelements den bestimmten oberen Spannungs-Schwellwert übersteigt, und das Umschaltelement (5 oder 5') von der zweiten Abzweig-Schaltung der Schaltungs-Anordnung auf die Einschaltstellung umgeschaltet wird, wenn die Spannung an den Klemmen unter den bestimmten niedrigeren Spannungs-Schwellwert gefallen ist.

9. Eine Batterie elektrischer Akkumulatoren, die von in Serien geschalteten Bauelementen zusammengesetzt ist, mit jeweils einem Akkumulator oder einer Gruppe von Akkumulatoren und insbesondere einer Gruppe von in Parallel geschalteten Akkumulatoren, **dadurch gekennzeichnet, daß** sie ein Sicherheits-Gerät nach einem der Ansprüche 1 bis 8 einschließt.
